(19) **Europäisches Patentamt / European Patent Office / Office européen des brevets**

(11) **EP 4 701 258 A1**

(12) **EUROPEAN PATENT APPLICATION**
published in accordance with Art. 153(4) EPC

(43) Date of publication:
**25.02.2026 Bulletin 2026/09**

(21) Application number: **23936492.0**

(22) Date of filing: **25.12.2023**

(51) International Patent Classification (IPC):
**H04W 24/08** (2009.01)   **H04W 24/10** (2009.01)

(52) Cooperative Patent Classification (CPC):
**H04B 7/0456; H04B 7/06; H04W 24/08; H04W 24/10**

(86) International application number:
**PCT/CN2023/141352**

(87) International publication number:
**WO 2024/230188 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.05.2023 CN 202310515784**

(71) Applicant: **ZTE Corporation**
**Shenzhen, Guangdong 518057 (CN)**

(72) Inventors:
• **LI, Yong**
  **Shenzhen, Guangdong 518057 (CN)**
• **ZHENG, Guozeng**
  **Shenzhen, Guangdong 518057 (CN)**
• **LU, Zhaohua**
  **Shenzhen, Guangdong 518057 (CN)**
• **LI, Lun**
  **Shenzhen, Guangdong 518057 (CN)**

(74) Representative: **Aipex B.V.**
**Vestdijk 51**
**5611 CA Eindhoven (NL)**

(54) **CHANNEL STATE INFORMATION REPORTING METHOD, CHANNEL STATE INFORMATION RECEIVING METHOD, COMMUNICATION NODE, AND STORAGE MEDIUM**

(57)   Provided are a channel state information reporting and receiving method, a communication node, and a storage medium. The method includes acquiring configuration information for channel state information; and reporting the channel state information to a second communication node according to the configuration information. The channel state information includes precoding matrix information. The overhead for reporting the precoding matrix information is within a constrained range.

Acquire configuration information for channel state information ⟩ 110

Report the channel state information to a second communication node according to the configuration information, where the channel state information includes precoding matrix information, and the overhead for reporting the precoding matrix information is within a constrained range ⟩ 120

**FIG. 2**

## Description

TECHNICAL FIELD

The present application relates to the field of wireless communication technology, for example, a channel state information reporting method, a channel state information receiving method, a communication node, and a storage medium.

BACKGROUND

Channel state information (CSI) is used for describing channel attributes of a communication link. Generally, a base station sends a reference signal; a terminal measures the reference signal, determines channel state information from the base station to the terminal, and reports the channel state information to the base station; and the base station receives the channel state information reported by the terminal. The base station determines a data transmission policy according to a channel state represented by the received channel state information and transmits data. It can be seen that the accuracy of the channel state represented by the channel state information affects the transmission policy of the base station and thus affects the data transmission efficiency. In the process of reporting the channel state information, an increase in the overhead reduces the performance of the wireless system while a decrease in the overhead reduces the accuracy of the fed-back channel state information.

SUMMARY

The present application provides a channel state information reporting and receiving method, a communication node, and a storage medium.

Embodiments of the present application provide a channel state information reporting method applied to a first communication node and including the following:
Configuration information for channel state information is acquired.

The channel state information is reported to a second communication node according to the configuration information. The channel state information includes precoding matrix information, and an overhead for reporting the precoding matrix information is within a constrained range.

Embodiments of the present application also provide a channel state information receiving method applied to a second communication node and including the following:
Configuration information for channel state information is sent.

The channel state information reported by a first communication node is received. The channel state information includes precoding matrix information, and an overhead for reporting the precoding matrix information is within a constrained range.

Embodiments of the present application also provide a communication node. The communication node includes a memory, a processor, and a computer program stored in the memory and executable by the processor. The processor is configured to, when executing the computer program, perform the channel state information reporting method.

Embodiments of the present application also provide a computer-readable storage medium for storing a computer program. The computer program is configured to, when executed by a processor, cause the processor to perform the channel state information reporting method.

BRIEF DESCRIPTION OF DRAWINGS

FIG. 1 is a diagram of a communication system architecture according to an embodiment.

FIG. 2 is a flowchart of a channel state information reporting method according to an embodiment.

FIG. 3 is a flowchart of a channel state information receiving method according to an embodiment.

FIG. 4 is a diagram illustrating the structure of a channel state information reporting apparatus according to an embodiment.

FIG. 5 is a diagram illustrating the structure of a channel state information receiving apparatus according to an embodiment.

FIG. 6 is a diagram illustrating the hardware structure of a communication node according to an embodiment.

DETAILED DESCRIPTION

The present application is described hereinafter in conjunction with the drawings and embodiments. It is to be understood that the embodiments described herein are intended to explain the present application and not to limit the present application. It is to be noted that if not in collision, the embodiments of the present application and features therein may be combined with each other in any manner. Additionally, it is to be noted that for ease of description, only part, not all, of structures related to the present application are illustrated in the drawings.

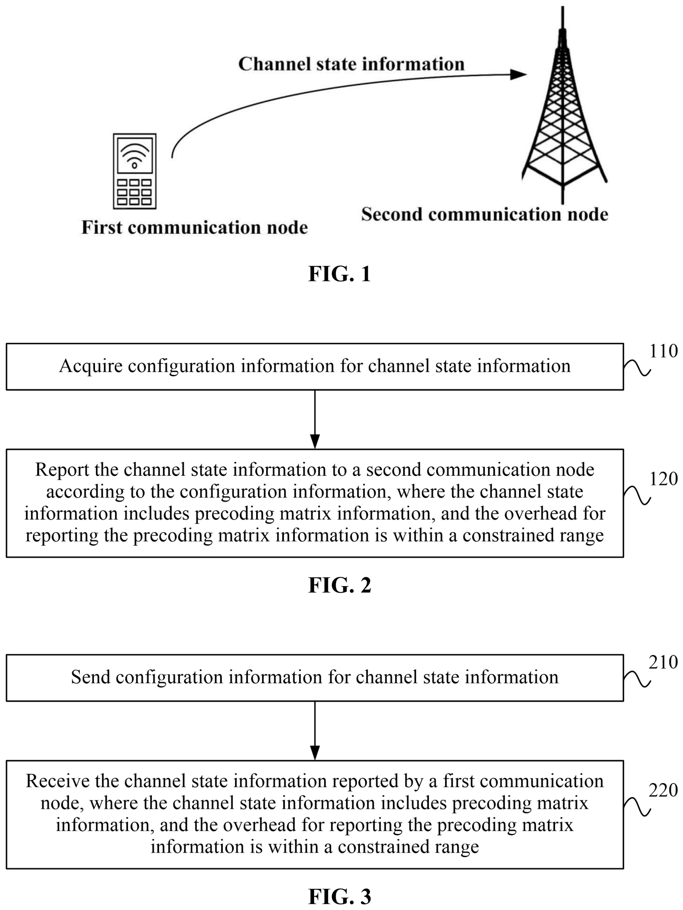

FIG. 1 is a diagram of a communication system architecture according to an embodiment. As shown in FIG. 1, in a wireless communication scenario, a first communication node communicates with a second communication node through a wireless channel. The first communication node may transmit CSI to the second communication node. The more overhead used, the more accurate the fed-back CSI. A decrease in the overhead reduces the accuracy of the fed-back channel state information while an increase in the overhead reduces the performance of the wireless system.

For example, the first communication node is a terminal, the second communication node is a base station, and the base station communicates with the terminal through a wireless channel. For another example, the first communication node is a terminal, the second communication node is a wireless router, and the wireless router communicates with the terminal through a wireless channel. For another example, the first communication node is a first base station, the second communication node is a second base station, and the first base station communicates with the second base station through a wireless channel. For another example, the first communication node is a first terminal, the second communication node is a second terminal, and the first terminal communicates with the second terminal through a wireless channel. For another example, the first communication node is a repeater, the second communication node is a base station, and the base station communicates with the repeater through a wireless channel. For another example, the first communication node is a terminal, the second communication node is a repeater, and the repeater communicates with the terminal through a wireless channel. For another example, the first communication node is a first repeater, the second communication node is a second repeater, and the first repeater communicates with the second repeater through a wireless channel. For another example, the first communication node is a base station, the second communication node is a satellite, and the satellite communicates with the base station through a wireless channel. For another example, the first communication node is a satellite, the second communication node is a base station, and the base station communicates with the satellite through a wireless channel. For another example, the first communication node is a terminal, the second communication node is a satellite, and the satellite communicates with the terminal through a wireless channel. For another example, the first communication node is a satellite, the second communication node is a terminal, and the terminal communicates with the satellite through a wireless channel. For another example, the first communication node is a ground device, the second communication node is an aircraft, and the aircraft communicates with the ground device through a wireless channel. For another example, the first communication node is a first aircraft, the second communication node is a second aircraft, and the first aircraft communicates with the second aircraft through a wireless channel.

In the present application, the terms "first" communication node, "second" communication node, "first" manner, "second" manner, "first" method, "second" method, "first" matrix, "second" matrix, "first" portion, and "second" portion are used for distinguishing descriptions and do not denote any order or priority.

FIG. 2 is a flowchart of a channel state information reporting method according to an embodiment. The method is applicable to a first communication node. In this embodiment, the first communication node may be a user equipment, and a second communication node may be a base station. As shown in FIG. 2, the method of this embodiment includes operations 110 and 120.

In 110, configuration information for channel state information is acquired.

In 120, the channel state information is reported to a second communication node according to the configuration information, where the channel state information includes precoding matrix information, and an overhead for reporting the precoding matrix information is within a constrained range.

In this embodiment, the channel state information includes precoding matrix information. The precoding matrix information is used to indicate a precoding matrix applied to an antenna of the communication node. In the process of reporting the CSI, the more overhead used, the more accurate the fed-back CSI. A decrease in the overhead reduces the accuracy of the fed-back CSI while an increase in the overhead reduces the performance of the wireless system. According to the method of this embodiment, the overhead for reporting the precoding matrix information in the process of reporting the CSI is controlled in a suitable range so that both the accuracy of CSI feedback and the system performance can be taken into account.

In this embodiment, the configuration information may include at least one of the following: a channel state information reporting band and content included in the channel state information required to be reported. Content included in the channel state information required to be reported includes at least one of the following: a channel quality indication (CQI) and a reporting format of the CQI, a precoding matrix, a reporting format of the precoding matrix, the rank of the precoding matrix, or the number of layers of the precoding matrix for the first communication node transmitting data using multiple antennas. One representation of the precoding matrix information is the precoding matrix. Another representation of the precoding matrix information is an element in the precoding matrix. Another representation of the precoding matrix information is the amplitude or the phase of an element in the precoding matrix. Another representation of the precoding matrix information is the precoding matrix after an information conversion or information transformation. The precoding matrix information is reported in a bit manner, in a scalar manner, or in a vector manner.

The overhead for reporting the precoding matrix information may be understood as the number of resources for reporting the precoding matrix information. One representation of the overhead for reporting the precoding matrix information is the number of bits for reporting the precoding matrix information. Another representation of the overhead for reporting the precoding matrix information is the number of scalars or vectors for reporting the precoding matrix information. The overhead for reporting the precoding matrix information is controlled in a range, so that with an appropriate amount of overhead, excessive overhead can be prevented and sufficient accuracy of the reported precoding information can be ensured, thus improving the performance of the system.

In an embodiment, the overhead for reporting the precoding matrix information includes one of the following:

the number of bits for reporting the precoding matrix information;

the number of scalars for reporting the precoding matrix information; or

the number of vectors for reporting the precoding matrix information.

In an embodiment, the overhead for reporting the precoding matrix information is less than or equal to a first set value (denoted as S), and the first set value is a positive integer.

In an embodiment, the first set value is determined by at least one of the following:

the size of the CSI reporting band;

the number of antenna ports for which the channel state information is intended;

the manner of acquiring the precoding matrix information;

the number of bits for quantizing one scalar in response to reporting the precoding matrix information in a scalar manner;

the number of bits for quantizing one vector in response to reporting the precoding matrix information in a vector manner;

an input category of a machine learning model for acquiring the precoding matrix information;

registration information of a machine learning model for acquiring the precoding matrix information;

the manner in which a machine learning model for acquiring the precoding matrix information incurs different output overheads; or

an indication of the second communication node.

S is determined by the size of the channel state information reporting band. In this embodiment, the channel state information reporting band may be understood as a frequency band on which the channel state information is required to be reported. One manner in which S is determined by the size of the channel state information reporting band is that S is determined by the number of resource blocks (RBs) included in the channel state information reporting band. For example, a different number of resource blocks corresponds to a different S. For another example, a different number range of resource blocks corresponds to a different S. For another example, S is determined by the product of the number of resource blocks included in the channel state information reporting band and one factor. For another example, S is determined by the product of the number of resource blocks included in the channel state information reporting band and one factor, and this factor is determined by the number of resource blocks included in the channel state information reporting band.

Another manner in which S is determined by the size of the channel state information reporting band is that the specific value is determined by the number of CQI subbands included in the channel state information reporting band. For example, a different number of CQI subbands corresponds to a different S. For another example, a different number range of CQI subbands corresponds to a different S. For another example, S is determined by the product of the number of CQI subbands included in the channel state information reporting band and one factor. For another example, S is determined by the product of the number of CQI subbands included in the channel state information reporting band and one factor, and the factor is determined by the number of CQI subbands included in the channel state information reporting band.

Another manner in which S is determined by the size of the channel state information reporting band is that the specific value of S is determined by the number of precoding matrix subbands included in the channel state information reporting band or by the number of precoding matrix indicator (PMI) subbands included in the channel state information reporting band. For example, a different number of precoding matrix indicator subbands corresponds to a different S. For example, a different number range of precoding matrix indicator subbands corresponds to a different S. For another example, S is determined by the product of the number of precoding matrix indicator subbands included in the channel state information reporting band and one factor. For another example, S is determined by the product of the number of precoding matrix indicator subbands included in the channel state information reporting band and one factor, and the factor is determined by the number of precoding matrix indicator subbands included in the channel state information reporting band.

The overhead for reporting the precoding matrix information is less than S, and S is determined by the size of the channel state information reporting band, thus adapting to the change of the size of the channel state information reporting band, preventing an excessive overhead with an appropriate amount of overhead, ensuring that the reported precoding information has sufficient accuracy, and improving the performance of the system.

In an embodiment, S increases as the size of the channel state information reporting band increases.

In an embodiment, S is determined by the number of antenna ports for which the channel state information is intended.

The first communication node reports the channel state information based on the assumption that the second communication node transmits data by using the precoding matrix with a certain number of antenna ports. The number of antenna ports for which the channel state information is intended is the number of antenna ports in the assumption. S is determined by the number of antenna ports for which the channel state information is intended, thus adapting to the change of the number of antenna ports, preventing an excessive overhead with an appropriate amount of overhead, ensuring that the reported precoding information has sufficient accuracy, and improving the performance of the system.

S is determined by the number of antenna ports for which the channel state information is intended. For example, S increases as the number of antenna ports for which the channel state information is intended increases. For another example, S is determined by the product of the number of antenna ports and one factor. For another example, S is determined by the product of the number of antenna ports and one factor, and the factor is determined by the number of antenna ports. For another example, different numbers of antenna ports correspond to different values of S. For another example, different ranges of antenna ports correspond to different values of S.

In an embodiment, S is determined by the manner of acquiring the precoding matrix information for transmission.

The first communication node acquires a channel coefficient matrix based on the measurement of the reference signal, acquires the precoding matrix based on the channel coefficient matrix, and then acquires the precoding matrix information for transmission based on the precoding matrix in an acquisition manner. For example, when the manner of acquiring the precoding matrix information for transmission is based on the codebook, the index number of the codeword corresponding to the precoding matrix is acquired from the codebook and used as the precoding matrix information for transmission. For another example, when the manner of acquiring the precoding matrix information for transmission is based on certain base vectors, coefficients for combining the base vectors into the precoding matrix are acquired and used as the precoding matrix information for transmission. For another example, the machine learning model is used to acquire the precoding matrix information for transmission, the precoding matrix is used as the input of the model, and the output of the model is used as the precoding matrix information for transmission. S is determined by the manner of acquiring the precoding matrix information for transmission, thus adapting to the change of the manner of acquiring the precoding matrix information for transmission, preventing an excessive overhead with an appropriate amount of overhead, ensuring that the reported precoding information has sufficient accuracy, and improving the performance of the system.

For ease of differentiation, the manner of acquiring the precoding matrix information for transmission is classified into different categories. One manner in which S is determined by the manner of acquiring the precoding matrix information for transmission is that S is determined by the category of the manner of acquiring the precoding matrix information for transmission. For ease of differentiation, the manner of acquiring the precoding matrix information for transmission is assigned different identification numbers. One manner in which S is determined by the manner of acquiring the precoding matrix information for transmission is that S is determined by the identification number of the manner of acquiring the precoding matrix information for transmission. For ease of differentiation, different machine learning models are assigned different identification numbers. One manner in which S is determined by the manner of acquiring the precoding matrix information for transmission is that S is determined by the identification number of the machine learning model for acquiring the precoding matrix information for transmission.

In an embodiment, S is determined by the number of bits for quantizing one scalar in response to reporting the precoding matrix information in a scalar manner.

One manner in which S is determined by the number of bits for quantizing one scalar is that different numbers of bits for quantizing one scalar correspond to different values of S. Another manner in which S is determined by the number of bits for quantizing one scalar is that different number ranges of bits for quantizing one scalar correspond to different values of S.

Another manner in which S is determined by the number of bits for quantizing one scalar is that for different numbers of bits for quantizing one scalar, different impact factors affect the calculation of S. Another manner in which S is determined by the number of bits for quantizing one scalar is that for different number ranges of bits for quantizing one scalar, different impact factors affect the calculation of S.

In an embodiment, S is determined by the number of bits for quantizing one vector in response to reporting the precoding matrix information in a vector manner.

One manner in which S is determined by the number of bits for quantizing one vector is that different numbers of bits for quantizing one vector correspond to different values of S. Another manner in which S is determined by the number of bits for quantizing one vector is that different number ranges of bits for quantizing one vector correspond to different values of S.

Another manner in which S is determined by the number of bits for quantizing one vector is that for different numbers of bits for quantizing one vector, different impact factors affect the calculation of S. Another manner in which S is determined by the number of bits for quantizing one vector is that for different number ranges of bits for quantizing one vector, different impact factors affect the calculation of S.

S is determined by the number of bits for quantizing one scalar or by the number of bits for quantizing one vector, thus adapting to the change of the number of bits for quantizing one scalar or the change of the number of bits for quantizing one vector, preventing an excessive overhead with an appropriate amount of overhead, ensuring that the reported precoding information has sufficient accuracy, and improving the performance of the system.

In an embodiment, S is determined by the input category of the machine learning model for acquiring the precoding matrix information for transmission.

The machine learning may have different input categories. For example, one input category is a channel coefficient matrix. For another example, another input category is a precoding matrix. S is determined by the input category of the machine learning model, thus adapting to the change of the input category of the machine learning model, preventing an excessive overhead with an appropriate amount of overhead, ensuring that the reported precoding information has sufficient accuracy, and improving the performance of the system.

In an embodiment, S is determined by the registration information of the machine learning model for acquiring the precoding matrix information for transmission.

Before being used, the machine learning model is required to register the supported output overhead range with the second communication node. S is selected from the overhead range in the registration information.

In an embodiment, S is determined by the manner in which a machine learning model for acquiring the precoding matrix information for transmission incurs different output overheads.

The machine learning model incurs different output overheads in different manners. For example, one manner is to take a segment from an output sequence, and the overhead varies with the length of the taken segment. For another example, one manner is that the overhead varies with the sequence of a required length acquired through an adaptation layer according to configuration parameters. S is determined by the manner in which the machine learning model incurs different output overheads, thus adapting to the change of the manner in which the machine learning model incurs different output overheads, preventing an excessive overhead with an appropriate amount of overhead, ensuring that the reported precoding information has sufficient accuracy, and improving the performance of the system.

In an embodiment, S is indicated by the second communication node.

For example, S is indicated by the configuration information. For another example, S is indicated by the second communication node through another indication information.

In an embodiment, the first set value is indicated by the second communication node from a first candidate value.

The first candidate value is determined by at least one of the following:

the size of the channel state information reporting band;

the number of antenna ports for which the channel state information is intended;

the manner of acquiring the precoding matrix information for transmission;

the number of bits for quantizing one scalar in response to reporting the precoding matrix information in a scalar manner;

the number of bits for quantizing one vector in response to reporting the precoding matrix information in a vector manner;

an input category of a machine learning model for acquiring the precoding matrix information;

registration information of a machine learning model for acquiring the precoding matrix information; or

the manner in which a machine learning model for acquiring the precoding matrix information incurs different output overheads.

In this embodiment, S is indicated or selected by the second communication node from a first candidate value so that the second communication node can adjust and determine S from the first candidate value. The determination or calculation of the first candidate value is affected by at least one of the following factors: the size of the channel state information reporting band; the number of antenna ports for which the channel state information is intended; the manner of acquiring the precoding matrix information for transmission; the number of bits for quantizing one scalar; the number of bits for quantizing one vector; the input category of the machine learning model; the registration information of the machine learning model for acquiring the precoding matrix information for transmission; or the manner in which the machine learning model for acquiring the precoding matrix information for transmission incurs different output overheads.

In an embodiment, the first set value is the product of the size of the channel state information reporting band, the number of antenna ports for which the channel state information is intended, and a set factor. The value of the set factor is indicated by the second communication node from a second candidate value.

The second candidate value is determined by at least one of the following:

the size of the channel state information reporting band;

the number of antenna ports for which the channel state information is intended;

the manner of acquiring the precoding matrix information for transmission;

the number of bits for quantizing one scalar in response to reporting the precoding matrix information in a scalar manner;

the number of bits for quantizing one vector in response to reporting the precoding matrix information in a vector manner;

an input category of a machine learning model for acquiring the precoding matrix information;

registration information of a machine learning model for acquiring the precoding matrix information; or

the manner in which a machine learning model for acquiring the precoding matrix information incurs different output overheads.

In an embodiment, the overhead for reporting the precoding matrix information is greater than or equal to a second set value (denoted as T), and the second set value is a positive integer. The minimum value of the overhead is constrained so that the overhead is sufficient to ensure that the reported precoding information has sufficient accuracy, thereby improving the performance of the system.

In an embodiment, a bit width of a field for reporting the overhead for reporting the precoding matrix information is determined by the first set value and the second set value or by the first set value.

The first communication node reports to the second communication node the overhead for transmitting the precoding matrix information so that the second communication node receives the transmitted precoding matrix information without blind detection, thereby reducing the system complexity. The first communication node reports the overhead for transmitting the precoding matrix information in the field with the bit width. The bit width of the field used is determined by S and T. One determination manner is that the bit width of the field used is the logarithm of the difference between S and T, where the logarithm is to base 2. Reference may be made to the expression $\left\lceil \log_2(S-T) \right\rceil$. Another determination manner is that the bit width of the field used is the logarithm of the number of possible overheads between S and T, where the logarithm is to base 2. Reference may be made to the expression $\left\lceil \log_2(N_1) \right\rceil$. $N_1$ denotes the number of possible overheads between S and T. The number of possible overheads between S and T is the number of candidate overheads between S and T.

The first communication node reports to the second communication node the overhead for transmitting the precoding matrix information so that the second communication node receives the transmitted precoding matrix information without blind detection, thereby reducing the system complexity.

The first communication node reports the overhead for transmitting the precoding matrix information in the field with the bit width. The bit width of the field used is determined by S. One determination manner is that the bit width of the field used is the logarithm of S, where the logarithm is to base 2. Reference may be made to the expression $\left\lceil \log_2(S) \right\rceil$. Another determination manner is that the bit width of the field used is the logarithm of the number of possible overheads less than S, where the logarithm is to base 2. Reference may be made to the expression $\left\lceil \log_2(N_2) \right\rceil$. $N_2$ denotes the number of possible overheads less than S. The number of possible overheads less than S is the number of candidate overheads less than S.

The candidate overhead refers to a candidate overhead configured by the base station or a candidate overhead supported in the registration information.

In an embodiment, the compression ratio for reporting the precoding matrix information is greater than or equal to a third set value (denoted as K), the third set value is a positive number, and the compression ratio is the ratio of an output overhead of the manner of acquiring the precoding matrix information to an input data volume of the manner of acquiring the precoding matrix information.

The compression ratio is the ratio of the output overhead of the acquisition manner to the input data volume of the acquisition manner. For example, the compression ratio is the ratio of the number of output scalars of the acquisition manner to the number of input scalars of the acquisition manner. For another example, the compression ratio is the ratio of the number of output vectors of the acquisition manner to the number of input vectors of the acquisition manner. For another example, the compression ratio is the ratio of the number of output scalars of the acquisition manner to the number of elements in an input matrix of the acquisition manner. For another example, the compression ratio is the ratio of the number of output vectors of the acquisition manner to the number of elements in the input matrix of the acquisition manner.

In an embodiment, the third set value is indicated by the second communication node. For example, K is indicated by the configuration information. For another example, K is indicated by the second communication node through another indication information.

In an embodiment, the compression ratio for reporting the precoding matrix information is less than or equal to a fourth set value (denoted as M), the fourth set value is a positive number, and the compression ratio is the ratio of the output overhead of the manner of acquiring the precoding matrix information to the input data volume of the manner of acquiring the precoding matrix information.

The compression ratio is less than M. M is a positive number. The maximum compression ratio is constrained so that the overhead is sufficient to ensure that the reported precoding information has sufficient accuracy, thereby improving the performance of the system.

In an embodiment, the bit width of the field for reporting the compression ratio for reporting the precoding matrix information is determined by a third set value and a fourth set value or by a third set value.

In this embodiment, the bit width of the field for reporting the compression ratio is determined by M and K. The first communication node reports the compression ratio to the second communication node so that the second communication node receives the transmitted precoding matrix information without blind detection, thereby reducing the system complexity. The first communication node reports the compression ratio in a field with a bit width. The bit width of the field used is determined by M and K. One determination manner is that the bit width of the field used is the logarithm of the difference between M and K, where the logarithm is to base 2. Reference may be made to the expression

$$\lceil \log_2(M-K) \rceil$$

. Another determination manner is that the bit width of the field used is the logarithm of the number of possible overheads between M and K, where the logarithm is to base 2. Reference may be made to the

expression $\lceil \log_2(N_3) \rceil$ . $N_3$ denotes the number of possible compression ratios between M and K. The number of possible compression ratios between M and K is the number of candidate compression ratios between M and K.

The first communication node reports the compression ratio to the second communication node so that the second communication node receives the transmitted precoding matrix information without blind detection, thereby reducing the system complexity. The first communication node reports the compression ratio in the field with the bit width. The bit width of the field used is determined by K. One determination manner is that the bit width of the field used is the logarithm of K, where the logarithm is to base 2. Reference may be made to the

expression $\lceil \log_2(K) \rceil$ . Another determination manner is that the bit width of the field used is the logarithm of the number of possible overheads greater than or equal to K, where the logarithm is to base 2. Reference may be made

to the expression $\lceil \log_2(N_4) \rceil$ . $N_4$ denotes the number of possible compression ratios greater than or equal to K. The number of possible compression ratios greater than or equal to S is the number of candidate overheads greater than or equal to S.

The candidate compression ratio refers to a candidate compression ratio configured by the base station or a candidate compression ratio supported in the registration information.

In an embodiment, the configuration information includes a set of candidate overheads and a scale factor corresponding to each layer of the precoding matrix, and the method also includes selecting one overhead from the candidate overheads. The overhead corresponding to each layer of the precoding matrix is determined by the product of the selected overhead and the scale factor corresponding to each layer of the precoding matrix.

In an embodiment, the configuration information includes one overhead and a set of scale factors, and the method also includes selecting one scale factor. The overhead for reporting the precoding matrix information is determined by the product of the one overhead and the selected scale factor.

In an embodiment, the configuration information includes a candidate overhead corresponding to each layer of a precoding matrix and the maximum total overhead, and the method also includes selecting the overhead corresponding to each layer of the precoding matrix. The total overhead of each layer of the precoding matrix is less than or equal to the maximum total overhead.

In an embodiment, the configuration information includes a set of candidate overheads and key performance indicators corresponding to the candidate overheads, and the method also includes selecting one overhead from the set of candidate overheads according to the key performance indicators corresponding to the candidate overheads to serve as the overhead for reporting the precoding matrix information.

In an embodiment, the configuration information includes a set of candidate overheads; the method also includes acquiring registration information of a machine learning model for processing the precoding matrix information, where the registration information includes key performance indicators corresponding to the candidate overheads; and the method also includes selecting one overhead from the set of candidate overheads according to the key performance indicators corresponding to the candidate overheads to serve as the overhead for reporting the precoding matrix information.

In an embodiment, the configuration information includes one overhead. The one overhead is the overhead for reporting the precoding matrix information.

In this embodiment, the following cases are included:

(1) The configuration information includes a set of candidate overheads. The first communication node selects one overhead from the candidate overheads. The configuration information also includes the scale factor corresponding to each layer of the precoding matrix. The overhead corresponding to each layer of the precoding matrix is determined by the product of the selected overhead and the scale factor corresponding to each layer of the precoding matrix.

(2) The configuration information includes one overhead and a set of scale factors. The first communication node selects one scale factor first. The overhead of the precoding matrix is the product of the overhead indicated by the configuration information and the selected scale factor.

(3) The configuration information includes candidate overheads corresponding to each layer of the precoding matrix and the maximum total overhead. The first communication node selects the overhead corresponding to each layer of the precoding matrix. The total overhead of each layer of the precoding matrix is less than the maximum total overhead.

(4) The configuration information includes a set of candidate overheads and the performance KPI corresponding to each candidate overhead. The first communication node selects one overhead from the set of candidate overheads according to the performance KPI.

(5) The configuration information includes a set of candidate overheads. The registration information includes the performance KPI corresponding to each overhead in the candidate overheads. The second communication node selects one overhead from the candidate overheads according to the performance KPI.

(6) The configuration information includes one overhead. The first communication node transmits the precoding matrix information by using the overhead provided by the configuration information.

In an embodiment, the method also includes receiving indication information about selecting a codebook subset from the second communication node, and reporting the selected codebook subset according to the indication information.

The precoding matrix information is reported according to the selected codebook subset.

One manner for the second communication node to indicate selecting a codebook subset is to include the indication of the second communication node about selecting a codebook subset in the configuration information. Another manner for the second communication node to indicate selecting a codebook subset is that the indication of the second communication node about selecting a codebook subset is different from the indication of the configuration information. One manner in which the first communication node reports the selected codebook subset is that the selected codebook subset is reported in the reported channel state information. Another manner in which the first communication node reports the selected codebook subset is that the selected codebook subset is not reported in the reported channel state information.

In an embodiment, the method also includes receiving indication information about a function entity from the second communication node. Input of the function entity is an index number. Output of the function entity is a precoding matrix.

In an embodiment, the method also includes selecting an index number set from a candidate index number set, and feeding back an index number by using a bit field.

Values of the bit field are mapped in ascending order to index numbers in the selected index number set. The value 0 in the bit field is mapped to the smallest index number in the selected index number set. The bit width (the number of bits) of the bit field is determined by the number of index numbers in the selected index number set.

The indication about the function entity may be included in the configuration information or may be different from the configuration information.

FIG. 3 is a flowchart of a channel state information receiving method according to an embodiment. As shown in FIG. 3, the method of this embodiment includes operations 210 and 220.

In 210, configuration information for channel state information is sent.

In 220, the channel state information reported by a first communication node is received, where the channel state information includes precoding matrix information, and an overhead for reporting the precoding matrix information is within a constrained range.

According to the method of this embodiment, the overhead for reporting the precoding matrix information is controlled in a suitable range so that both the accuracy of channel state information feedback and the system performance can be taken into account.

In an embodiment, the overhead for reporting the precoding matrix information includes one of the following:

the number of bits for reporting the precoding matrix information;

the number of scalars for reporting the precoding matrix information; or

the number of vectors for reporting the precoding matrix information.

In an embodiment, the overhead for reporting the precoding matrix information is less than or equal to a first set value, and the first set value is a positive integer.

In an embodiment, the first set value is determined by at least one of the following:

the size of the channel state information reporting band;

the number of antenna ports for which the channel state information is intended;

the manner of acquiring the precoding matrix information;

the number of bits for quantizing one scalar in response to reporting the precoding matrix information in a scalar manner;

the number of bits for quantizing one vector in response to reporting the precoding matrix information in a vector manner;

an input category of a machine learning model for acquiring the precoding matrix information;

registration information of a machine learning model for acquiring the precoding matrix information;

the manner in which a machine learning model for acquiring the precoding matrix information incurs different output overheads; or

an indication of the second communication node.

In an embodiment, the first set value is indicated by the second communication node from a first candidate value.

The first candidate value is determined by at least one of the following:

the size of the channel state information reporting band;

the number of antenna ports for which the channel state information is intended;

the manner of acquiring the precoding matrix information for transmission;

the number of bits for quantizing one scalar in response to reporting the precoding matrix information in a scalar manner;

the number of bits for quantizing one vector in response to reporting the precoding matrix information in a vector manner;

the input category of the machine learning model for acquiring the precoding matrix information;

the registration information of the machine learning model for acquiring the precoding matrix information; or

the manner in which a machine learning model for acquiring the precoding matrix information incurs different output overheads.

In an embodiment, the first set value is the product of the size of the channel state information reporting band, the number of antenna ports for which the channel state information is intended, and a set factor. The value of the set factor is indicated by the second communication node from a second candidate value.

The second candidate value is determined by at least one of the following:

the size of the channel state information reporting band;

the number of antenna ports for which the channel state information is intended;

the manner of acquiring the precoding matrix information for transmission;

the number of bits for quantizing one scalar in response to reporting the precoding matrix information in a scalar manner;

the number of bits for quantizing one vector in response to reporting the precoding matrix information in a vector manner;

the input category of the machine learning model for acquiring the precoding matrix information;

the registration information of the machine learning model for acquiring the precoding matrix information; or

the manner in which a machine learning model for acquiring the precoding matrix information incurs different output overheads.

In an embodiment, the overhead for reporting the precoding matrix information is greater than or equal to a second set value, and the second set value is a positive integer.

In an embodiment, the bit width of the field for reporting the overhead for reporting the precoding matrix information is determined by the first set value and the second set value or by the first set value.

In an embodiment, the compression ratio for reporting the precoding matrix information is greater than or equal to a third set value, the third set value is a positive number, and the compression ratio is the ratio of the output overhead of the manner of acquiring the precoding matrix information to the input data volume of the manner of acquiring the precoding matrix information.

In an embodiment, the third set value is indicated by the second communication node.

In an embodiment, the compression ratio for reporting the precoding matrix information is less than or equal to a fourth set value, the fourth set value is a positive number, and the compression ratio is the ratio of the output overhead of the manner of acquiring the precoding matrix information to the input data volume of the manner of acquiring the precoding matrix information.

In an embodiment, the bit width of the field for reporting the compression ratio for reporting the precoding matrix information is determined by the third set value and the fourth set value or by the third set value.

In an embodiment, the configuration information includes a set of candidate overheads and a scale factor corresponding to each layer of a precoding matrix.

In an embodiment, the configuration information includes one overhead and a set of scale factors.

In an embodiment, the configuration information includes candidate overheads corresponding to each layer of a precoding matrix and the maximum total overhead.

In an embodiment, the configuration information includes a set of candidate overheads and key performance indicators corresponding to the candidate overheads.

In an embodiment, the configuration information includes a set of candidate overheads.

The registration information of a machine learning model for processing the precoding matrix information includes key performance indicators corresponding to the candidate overheads.

In an embodiment, the configuration information includes one overhead. The one overhead is the overhead for reporting the precoding matrix information.

In an embodiment, the method also includes sending indication information about selecting a codebook subset, and receiving the selected codebook subset reported by the first communication node according to the indication information.

The precoding matrix information is reported according to the selected codebook subset.

In an embodiment, the method also includes sending indication information about a function entity. Input of the function entity is an index number. Output of the function entity is a precoding matrix.

In an embodiment, the method also includes receiving an index number fed back by using a bit field.

Values of the bit field are mapped in ascending order to index numbers in the selected index number set. The value 0 in the bit field is mapped to the smallest index number in the selected index number set. The bit width of the bit field is determined by the number of index numbers in the selected index number set.

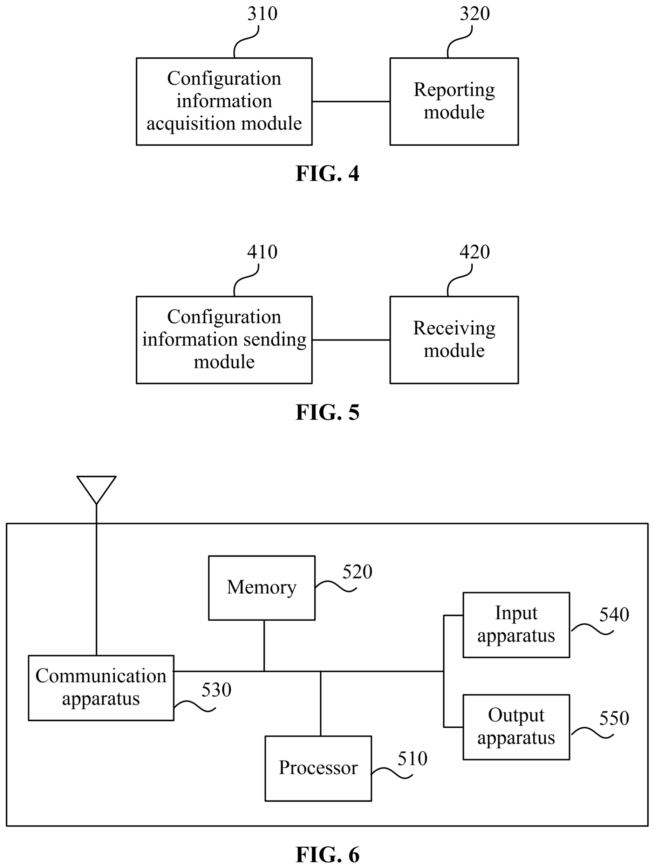

Embodiments of the present application also provide a channel state information reporting apparatus. FIG. 4 is a diagram illustrating the structure of a channel state information reporting apparatus according to an embodiment. As shown in FIG. 4, the channel state information reporting apparatus includes a configuration information acquisition module 310 and a reporting module 320.

The configuration information acquisition module 310 is configured to acquire configuration information for channel state information.

The reporting module 320 is configured to report the channel state information to a second communication node according to the configuration information. The channel state information includes precoding matrix information. An overhead for reporting the precoding matrix information is within a constrained range.

In the channel state information reporting apparatus of this embodiment, the configuration information acquisition module is configured to acquire configuration information for channel state information, and the reporting module is configured to report channel state information to the second communication node. The channel state information includes precoding matrix information. The overhead for reporting the precoding matrix information is within a constrained range. On this basis, the overhead for reporting the precoding matrix information in the process of reporting the CSI is controlled in a suitable range so that both the accuracy of CSI feedback and the system performance can be taken into account.

In an embodiment, the overhead for reporting the precoding matrix information includes one of the following:

the number of bits for reporting the precoding matrix information;

the number of scalars for reporting the precoding matrix information; or

the number of vectors for reporting the precoding matrix information.

In an embodiment, the overhead for reporting the precoding matrix information is less than or equal to a first set value, and the first set value is a positive integer.

In an embodiment, the first set value is determined by at least one of the following:

the size of the channel state information reporting band;

the number of antenna ports for which the channel state information is intended;

the manner of acquiring the precoding matrix information;

the number of bits for quantizing one scalar in response to reporting the precoding matrix information in a scalar manner;

the number of bits for quantizing one vector in response to reporting the precoding matrix information in a vector manner;

an input category of a machine learning model for acquiring the precoding matrix information;

registration information of a machine learning model for acquiring the precoding matrix information;

a manner in which a machine learning model for acquiring the precoding matrix information incurs different output overheads; or

an indication of the second communication node.

In an embodiment, the first set value is indicated by the second communication node from a first candidate value.
The first candidate value is determined by at least one of the following:

the size of the channel state information reporting band;

the number of antenna ports for which the channel state information is intended;

the manner of acquiring the precoding matrix information for transmission;

the number of bits for quantizing one scalar in response to reporting the precoding matrix information in a scalar manner;

the number of bits for quantizing one vector in response to reporting the precoding matrix information in a vector manner;

the input category of the machine learning model for acquiring the precoding matrix information;

the registration information of the machine learning model for acquiring the precoding matrix information; or

the manner in which a machine learning model for acquiring the precoding matrix information incurs different output overheads.

In an embodiment, the first set value is the product of the size of a channel state information reporting band, the number of antenna ports for which the channel state information is intended, and a set factor. The value of the set factor is indicated by the second communication node from a second candidate value.
The second candidate value is determined by at least one of the following:

the size of the channel state information reporting band;

the number of antenna ports for which the channel state information is intended;

the manner of acquiring the precoding matrix information for transmission;

the number of bits for quantizing one scalar in response to reporting the precoding matrix information in a scalar manner;

the number of bits for quantizing one vector in response to reporting the precoding matrix information in a vector manner;

the input category of the machine learning model for acquiring the precoding matrix information;

the registration information of the machine learning model for acquiring the precoding matrix information; or

the manner in which a machine learning model for acquiring the precoding matrix information incurs different output overheads.

In an embodiment, the overhead for reporting the precoding matrix information is greater than or equal to a second set value, and the second set value is a positive integer.
In an embodiment, a bit width of a field for reporting the overhead for reporting the precoding matrix information is determined by a first set value and a second set value or by a first set value.
In an embodiment, a compression ratio for reporting the precoding matrix information is greater than or equal to a third set value, the third set value is a positive number, and the compression ratio is the ratio of an output overhead of the manner of acquiring the precoding matrix information to an input data volume of the manner of acquiring the precoding matrix information.

In an embodiment, the third set value is indicated by the second communication node.

In an embodiment, the compression ratio for reporting the precoding matrix information is less than or equal to a fourth set value, the fourth set value is a positive number, and the compression ratio is the ratio of the output overhead of the manner of acquiring the precoding matrix information to the input data volume of the manner of acquiring the precoding matrix information.

In an embodiment, a bit width of a field for reporting the compression ratio for reporting the precoding matrix information is determined by a third set value and a fourth set value or by a third set value.

In an embodiment, the configuration information includes a set of candidate overheads and a scale factor corresponding to each layer of a precoding matrix.

The apparatus also includes a first determination module.

The first determination module is configured to select one overhead from the candidate overheads. The overhead corresponding to each layer of the precoding matrix is determined by the product of the selected overhead and the scale factor corresponding to each layer of the precoding matrix.

In an embodiment, the configuration information includes one overhead and a set of scale factors.

The apparatus also includes a second determination module.

The second determination module is configured to select one scale factor. The overhead for reporting the precoding matrix information is determined by the product of the one overhead and the selected scale factor.

In an embodiment, the configuration information includes a candidate overhead corresponding to each layer of a precoding matrix and the maximum total overhead.

The apparatus also includes a third determination module.

The third determination module is configured to select an overhead corresponding to each layer of the precoding matrix. The total overhead of each layer of the precoding matrix is less than or equal to the maximum total overhead.

In an embodiment, the configuration information includes a set of candidate overheads and key performance indicators corresponding to the candidate overheads.

The apparatus also includes a fourth determination module.

The fourth determination module is configured to select one overhead from the candidate overheads according to the key performance indicators corresponding to the candidate overheads to serve as the overhead for reporting the precoding matrix information.

In an embodiment, the configuration information includes a set of candidate overheads.

The apparatus also includes a registration module.

The registration module is configured to acquire registration information of a machine learning model for processing the precoding matrix information. The registration information includes key performance indicators corresponding to the candidate overheads.

The apparatus also includes a fifth determination module.

The fifth determination module is configured to select one overhead from the candidate overheads according to the key performance indicators corresponding to the candidate overheads to serve as the overhead for reporting the precoding matrix information.

In an embodiment, the configuration information includes one overhead. The one overhead is the overhead for reporting the precoding matrix information.

In an embodiment, the apparatus also includes a first indication information receiving module and a codebook reporting module.

The first indication information receiving module is configured to receive indication information about selecting a codebook subset from the second communication node.

The codebook reporting module is configured to report the selected codebook subset according to the indication information.

The precoding matrix information is reported according to the selected codebook subset.

In an embodiment, the apparatus also includes a second indication information receiving module.

The second indication information receiving module is configured to receive indication information about a function entity from the second communication node. Input of the function entity is an index number. Output of the function entity is a precoding matrix.

In an embodiment, the apparatus also includes a set selection module and a feedback module.

The set selection module is configured to select an index number set from a candidate index number set.

The feedback module is configured to feed back an index number by using a bit field.

Values of the bit field are mapped in ascending order to index numbers in the selected index number set. The value 0 in the bit field is mapped to the smallest index number in the selected index number set.

The bit width of the bit field is determined by the number of index numbers in the selected index number set.

The channel state information reporting apparatus of this embodiment and the channel state information reporting method of any previous embodiment belong to the same inventive concept. For technical details that are not exhausted in this embodiment, reference may be made to any previous embodiment. This embodiment has the same beneficial effects as the channel state information reporting method performed.

Embodiments of the present application also provide a channel state information reporting apparatus.

FIG. 5 is a diagram illustrating the structure of a channel state information reporting apparatus according to an embodiment. As shown in FIG. 5, the channel state information reporting apparatus includes a configuration information sending module 410 and a receiving module 420.

The configuration information sending module 410 is configured to send configuration information for channel state information.

The receiving module 420 is configured to receive the channel state information reported by a first communication node. The channel state information includes precoding matrix information. An overhead for reporting the precoding matrix information is within a constrained range.

In the channel state information reporting apparatus of this embodiment, the configuration information sending module is configured to send configuration information for channel state information, and the receiving module is configured to receive channel state information reported by a first communication node. The channel state information includes precoding matrix information. The overhead for reporting the precoding matrix information is within a constrained range. On this basis, the overhead for reporting the precoding matrix information in the process of reporting the CSI is controlled in a suitable range so that both the accuracy of CSI feedback and the system performance can be taken into account.

In an embodiment, the overhead for reporting the precoding matrix information includes one of the following:

the number of bits for reporting the precoding matrix information;

the number of scalars for reporting the precoding matrix information; or

the number of vectors for reporting the precoding matrix information.

In an embodiment, the overhead for reporting the precoding matrix information is less than or equal to a first set value, and the first set value is a positive integer.

In an embodiment, the first set value is determined by at least one of the following:

the size of the channel state information reporting band;

the number of antenna ports for which the channel state information is intended;

the manner of acquiring the precoding matrix information;

the number of bits for quantizing one scalar in response to reporting the precoding matrix information in a scalar manner;

the number of bits for quantizing one vector in response to reporting the precoding matrix information in a vector manner;

an input category of a machine learning model for acquiring the precoding matrix information;

registration information of a machine learning model for acquiring the precoding matrix information;

the manner in which a machine learning model for acquiring the precoding matrix information incurs different output overheads; or

an indication of the second communication node.

In an embodiment, the first set value is indicated by the second communication node from a first candidate value.

The first candidate value is determined by at least one of the following:

the size of the channel state information reporting band;

the number of antenna ports for which the channel state information is intended;

the manner of acquiring the precoding matrix information for transmission;

the number of bits for quantizing one scalar in response to reporting the precoding matrix information in a scalar manner;

the number of bits for quantizing one vector in response to reporting the precoding matrix information in a vector manner;

the input category of the machine learning model for acquiring the precoding matrix information;

the registration information of the machine learning model for acquiring the precoding matrix information; or

the manner in which a machine learning model for acquiring the precoding matrix information incurs different output overheads.

In an embodiment, the first set value is the product of the size of a channel state information reporting band, the number of antenna ports for which the channel state information is intended, and a set factor. The value of the set factor is indicated by the second communication node from a second candidate value.

The second candidate value is determined by at least one of the following:

the size of the channel state information reporting band;

the number of antenna ports for which the channel state information is intended;

the manner of acquiring the precoding matrix information for transmission;

the number of bits for quantizing one scalar in response to reporting the precoding matrix information in a scalar manner;

the number of bits for quantizing one vector in response to reporting the precoding matrix information in a vector manner;

the input category of the machine learning model for acquiring the precoding matrix information;

the registration information of a machine learning model for acquiring the precoding matrix information; or

the manner in which a machine learning model for acquiring the precoding matrix information incurs different output overheads.

In an embodiment, the overhead for reporting the precoding matrix information is greater than or equal to a second set value, and the second set value is a positive integer.

In an embodiment, a bit width of a field for reporting the overhead for reporting the precoding matrix information is determined by a first set value and a second set value or by a first set value.

In an embodiment, a compression ratio for reporting the precoding matrix information is greater than or equal to a third set value, the third set value is a positive number, and the compression ratio is the ratio of an output overhead of the manner of acquiring the precoding matrix information to an input data volume of the manner of acquiring the precoding matrix information.

In an embodiment, the third set value is indicated by the second communication node.

In an embodiment, the compression ratio for reporting the precoding matrix information is less than or equal to a fourth set value, the fourth set value is a positive number, and the compression ratio is the ratio of the output overhead of the manner of acquiring the precoding matrix information to the input data volume of the manner of acquiring the precoding matrix information.

In an embodiment, a bit width of a field for reporting the compression ratio for reporting the precoding matrix information is determined by a third set value and a fourth set value or by a third set value.

In an embodiment, the configuration information includes a set of candidate overheads and a scale factor corresponding to each layer of a precoding matrix.

In an embodiment, the configuration information includes one overhead and a set of scale factors.

In an embodiment, the configuration information includes a candidate overhead corresponding to each layer of a precoding matrix and the maximum total overhead.

In an embodiment, the configuration information includes a set of candidate overheads and key performance indicators corresponding to the candidate overheads.

In an embodiment, the configuration information includes a set of candidate overheads.

The registration information of a machine learning model for processing the precoding matrix information includes key performance indicators corresponding to the candidate overheads.

In an embodiment, the configuration information includes one overhead. The one overhead is the overhead for reporting the precoding matrix information.

In an embodiment, the apparatus also includes a first indication information sending module and a codebook subset receiving module.

The first indication information sending module is configured to send indication information about selecting a codebook subset.

The codebook subset receiving module is configured to report the selected codebook subset according to the indication information.

The precoding matrix information is reported according to the selected codebook subset.

In an embodiment, the apparatus also includes a second indication information sending module.

The second indication information sending module is configured to send indication information about a function entity. Input of the function entity is an index number. Output of the function entity is a precoding matrix.

In an embodiment, the apparatus also includes an index number receiving module.

The index number receiving module is configured to feed back an index number by using a bit field.

Values of the bit field are mapped in ascending order to index numbers in the selected index number set. The value 0 in the bit field is mapped to the smallest index number in the selected index number set.

The bit width of the bit field is determined by the number of index numbers in the selected index number set.

The channel state information reporting apparatus of this embodiment and the channel state information reporting method of any previous embodiment belong to the same inventive concept. For technical details that are not exhausted in this embodiment, reference may be made to any previous embodiment. This embodiment has the same beneficial effects as the channel state information reporting method performed.

Embodiments of the present application also provide a communication node. FIG. 6 is a diagram illustrating the hardware structure of a communication node according to an embodiment. As shown in FIG. 6, the communication node of the present application includes a processor 510 and a memory 520. One or more processors 510 are configured in the communication node. FIG. 6 illustrates one processor 510 by way of example. The memory 520 is configured to store one or more programs. The one or more programs are executed by the one or more processors 510 to cause the one or more processors 510 to perform the channel state information reporting method of any embodiment of the present application.

The communication node also includes a communication apparatus 530, an input apparatus 540, and an output apparatus 550.

The processor 510, the memory 520, the communication apparatus 530, the input apparatus 540, and the output apparatus 550 in the communication node may be connected via a bus or in other manners. In FIG. 6, the connection via a bus is shown as an example.

The input apparatus 540 may be configured to receive inputted digital or character information and generate key signal input related to user settings and function control of the communication node. The output apparatus 550 may include a display screen and other display devices.

The communication apparatus 530 may include a receiver and a transmitter. The communication apparatus 530 is configured to perform information transceiving communications under the control of the processor 510.

As a computer-readable storage medium, the memory 520 may be configured to store software programs, computer-executable programs, and modules, such as program instructions/modules (for example, the configuration information acquisition module 310 and the reporting module 320) corresponding to the channel state information reporting method according to any embodiment of the present application. The memory 520 may include a program storage region and a data storage region, where the program storage region may store an operating system and an application program required by at least one function, and the data storage region may store data or the like created according to the use of the communication node. In addition, the memory 520 may include a high-speed random access memory and a nonvolatile memory, such as at least one disk memory, a flash memory or other nonvolatile solid-state memories. In some examples, the memory 520 may also include memories located remotely from the processors 510, and these remote memories may be connected to the communication node via a network. Examples of the network include, but are not limited to, the Internet, an intranet, a local area network, a mobile communication network, and a combination thereof.

Embodiments of the present application also provide a storage medium for storing a computer program which, when executed by a processor, causes the processor to perform the channel state information reporting method of any embodiment of the present application.

The method includes acquiring configuration information for channel state information, and reporting the channel state information to a second communication node according to the configuration information. The channel state information includes precoding matrix information. The overhead for reporting the precoding matrix information is within a constrained range.

Alternatively, the method includes sending configuration information for channel state information, and receiving channel state information reported by a first communication node. The channel state information includes precoding matrix information. The overhead for reporting the precoding matrix information is within a constrained range.

A computer storage medium of an embodiment of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared or semiconductor system, apparatus or device or any combination thereof. Concrete examples (a non-exhaustive list) of the computer-readable storage medium include an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disk read-only memory (CD-ROM), an optical memory, a magnetic memory, and any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier, where the data signal carries computer-readable program codes. The data signal propagated in this manner may be in multiple forms, including, but not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

The program codes included in the computer-readable medium may be transmitted in any suitable medium including, but not limited to, a wireless medium, a wire, an optical cable, radio frequency (RF), or any suitable combination thereof.

Computer program codes for performing the operations of the present application may be written in one or more programming languages or a combination thereof. The programming languages include object-oriented programming languages such as Java, Smalltalk, and C++ and may further include conventional procedural programming languages such as "C" or similar programming languages. The program codes may be executed entirely on a user computer, executed partly on a user computer, executed as a stand-alone software package, executed partly on a user computer and partly on a remote computer, or executed entirely on a remote computer or a server. In the case related to the remote computer, the remote computer may be connected to the user computer via any type of network including a local area network (LAN) or a wide area network (WAN) or may be connected to an external computer (for example, via the Internet through an Internet service provider).

The preceding are example embodiments of the present application and are not intended to limit the scope of the present application.

It is to be understood by those skilled in the art that the term "user equipment" encompasses any appropriate type of wireless user device, such as a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM) and an optical memory device and system (a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The detailed description of example embodiments of the present application is provided above through exemplary and non-restrictive examples. However, considering the drawings and the claims, various modifications and adjustments to the preceding embodiments are apparent to those skilled in the art and do not deviate from the scope of the present application. Accordingly, the proper scope of the present application is determined according to the claims.

**Claims**

1. A channel state information reporting method, the method being applied to a first communication node and comprising:

   acquiring configuration information for channel state information; and
   reporting the channel state information to a second communication node according to the configuration information, wherein the channel state information comprises precoding matrix information, and an overhead for reporting the precoding matrix information is within a constrained range.

2. The channel state information reporting method of claim 1, wherein the overhead for reporting the precoding matrix information comprises one of:

   a number of bits for reporting the precoding matrix information;
   a number of scalars for reporting the precoding matrix information; or
   a number of vectors for reporting the precoding matrix information.

3. The channel state information reporting method of claim 1, wherein the overhead for reporting the precoding matrix information is less than or equal to a first set value, and the first set value is a positive integer.

4. The channel state information reporting method of claim 3, wherein the first set value is determined by at least one of:

a size of a channel state information reporting band;

a number of antenna ports for which the channel state information is intended;

a manner of acquiring the precoding matrix information;

a number of bits for quantizing one scalar in response to reporting the precoding matrix information in a scalar manner;

a number of bits for quantizing one vector in response to reporting the precoding matrix information in a vector manner;

an input category of a machine learning model for acquiring the precoding matrix information;

registration information of a machine learning model for acquiring the precoding matrix information;

a manner in which a machine learning model for acquiring the precoding matrix information incurs different output overheads; or

an indication of the second communication node.

5. The channel state information reporting method of claim 3, wherein the first set value is indicated by the second communication node from a first candidate value, and

the first candidate value is determined by at least one of:

a size of a channel state information reporting band;

a number of antenna ports for which the channel state information is intended;

a manner of acquiring the precoding matrix information for transmission;

a number of bits for quantizing one scalar in response to reporting the precoding matrix information in a scalar manner;

a number of bits for quantizing one vector in response to reporting the precoding matrix information in a vector manner;

an input category of a machine learning model for acquiring the precoding matrix information;

registration information of a machine learning model for acquiring the precoding matrix information; or

a manner in which a machine learning model for acquiring the precoding matrix information incurs different output overheads.

6. The channel state information reporting method of claim 3, wherein the first set value is a product of a size of a channel state information reporting band, a number of antenna ports for which the channel state information is intended, and a set factor; a value of the set factor is indicated by the second communication node from a second candidate value; and the second candidate value is determined by at least one of:

the size of the channel state information reporting band;

the number of antenna ports for which the channel state information is intended;

a manner of acquiring the precoding matrix information for transmission;

a number of bits for quantizing one scalar in response to reporting the precoding matrix information in a scalar manner;

a number of bits for quantizing one vector in response to reporting the precoding matrix information in a vector manner;

an input category of a machine learning model for acquiring the precoding matrix information;

registration information of a machine learning model for acquiring the precoding matrix information; or

a manner in which a machine learning model for acquiring the precoding matrix information incurs different output overheads.

7. The channel state information reporting method of claim 1, wherein the overhead for reporting the precoding matrix information is greater than or equal to a second set value, and the second set value is a positive integer.

8. The channel state information reporting method of claim 1, wherein a bit width of a field for reporting the overhead for reporting the precoding matrix information is determined by a first set value and a second set value or by a first set value.

9. The channel state information reporting method of claim 1, wherein a compression ratio for reporting the precoding matrix information is greater than or equal to a third set value, the third set value is a positive number, and the compression ratio is a ratio of an output overhead of a manner of acquiring the precoding matrix information to an input data volume of the manner of acquiring the precoding matrix information.

10. The channel state information reporting method of claim 9, wherein the third set value is indicated by the second communication node.

11. The channel state information reporting method of claim 1, wherein a compression ratio for reporting the precoding matrix information is less than or equal to a fourth set value, the fourth set value is a positive number, and the compression ratio is a ratio of an output overhead of a manner of acquiring the precoding matrix information to an input data volume of the manner of acquiring the precoding matrix information.

12. The channel state information reporting method of claim 1, wherein a bit width of a field for reporting a compression ratio for reporting the precoding matrix information is determined by a third set value and a fourth set value or by a third set value, and the compression ratio is a ratio of an output overhead of a manner of acquiring the precoding matrix information to an input data volume of the manner of acquiring the precoding matrix information.

13. The channel state information reporting method of claim 1, wherein the configuration information comprises a set of candidate overheads and a scale factor corresponding to each layer of a precoding matrix; and
the channel state information reporting method further comprises:
selecting one overhead from the set of candidate overheads, wherein an overhead corresponding to each layer of the precoding matrix is determined by a product of the selected overhead and the scale factor corresponding to each layer of the precoding matrix.

14. The channel state information reporting method of claim 1, wherein the configuration information comprises one overhead and a set of scale factors; and
the channel state information reporting method further comprises:
selecting one scale factor, wherein the overhead for reporting the precoding matrix information is determined by a product of the one overhead and the selected scale factor.

15. The channel state information reporting method of claim 1, wherein the configuration information comprises a candidate overhead corresponding to each layer of a precoding matrix and a maximum total overhead; and
the channel state information reporting method further comprises:
selecting an overhead corresponding to each layer of the precoding matrix, wherein a total overhead of each layer of the precoding matrix is less than or equal to the maximum total overhead.

16. The channel state information reporting method of claim 1, wherein the configuration information comprises a set of candidate overheads and key performance indicators respectively corresponding to the set of candidate overheads; and
the channel state information reporting method further comprises:
selecting, according to the key performance indicators respectively corresponding to the set of candidate overheads, one overhead from the set of candidate overheads to serve as the overhead for reporting the precoding matrix information.

17. The channel state information reporting method of claim 1, wherein the configuration information comprises a set of candidate overheads;
the channel state information reporting method further comprises:

acquiring registration information of a machine learning model for processing the precoding matrix information, wherein the registration information comprises key performance indicators respectively corresponding to the set of candidate overheads; and
the channel state information reporting method further comprises:
selecting one overhead from the set of candidate overheads according to the key performance indicators respectively corresponding to the set of candidate overheads to serve as the overhead for reporting the precoding matrix information.

18. The channel state information reporting method of claim 1, wherein the configuration information comprises one overhead, and the one overhead is the overhead for reporting the precoding matrix information.

19. The channel state information reporting method of claim 1, further comprising:

receiving, from the second communication node, indication information about selecting a codebook subset; and
reporting the selected codebook subset according to the indication information;
wherein the precoding matrix information is reported according to the selected codebook subset.

20. The channel state information reporting method of claim 1, further comprising:
receiving, from the second communication node, indication information about a function entity, wherein input of the function entity is an index number, and output of the function entity is a precoding matrix.

21. The channel state information reporting method of claim 20, further comprising:

selecting an index number set from a candidate index number set; and
feeding back an index number by using a bit field;
wherein values of the bit field are mapped in ascending order to index numbers in the selected index number set, and a value 0 in the bit field is mapped to a smallest index number in the selected index number set; and

a bit width of the bit field is determined by a number of index numbers in the selected index number set.

22. A channel state information receiving method, the method being applied to a second communication node and comprising:

sending configuration information for channel state information; and

receiving the channel state information reported by a first communication node, wherein the channel state information comprises precoding matrix information, and an overhead for reporting the precoding matrix information is within a constrained range.

23. A communication node, comprising a memory and at least one processor, wherein

the memory is configured to store at least one program; and

when the at least one program is executed by the at least one processor, the at least one processor is caused to perform the channel state information reporting method of any one of claims 1 to 22.

24. A computer-readable storage medium for storing a computer program which, when executed by a processor, causes the processor to perform the channel state information reporting method of any one of claims 1 to 22.

Channel state information

First communication node          Second communication node

**FIG. 1**

| | |
|---|---|
| Acquire configuration information for channel state information | 110 |

| | |
|---|---|
| Report the channel state information to a second communication node according to the configuration information, where the channel state information includes precoding matrix information, and the overhead for reporting the precoding matrix information is within a constrained range | 120 |

**FIG. 2**

| | |
|---|---|
| Send configuration information for channel state information | 210 |

| | |
|---|---|
| Receive the channel state information reported by a first communication node, where the channel state information includes precoding matrix information, and the overhead for reporting the precoding matrix information is within a constrained range | 220 |

**FIG. 3**

310

320

Configuration information acquisition module

Reporting module

**FIG. 4**

410

420

Configuration information sending module

Receiving module

**FIG. 5**

Memory 520

Input apparatus 540

Communication apparatus 530

Output apparatus 550

Processor 510

**FIG. 6**

## INTERNATIONAL SEARCH REPORT

| International application No. |
|---|
| **PCT/CN2023/141352** |

| | |
|---|---|
| **A.** | **CLASSIFICATION OF SUBJECT MATTER** |
| | H04W24/08(2009.01)i; H04W24/10(2009.01)i |

According to International Patent Classification (IPC) or to both national classification and IPC

| | |
|---|---|
| **B.** | **FIELDS SEARCHED** |

Minimum documentation searched (classification system followed by classification symbols)

IPC:H04W24/-

Documentation searched other than minimum documentation to the extent that such documents are included in the fields searched

Electronic data base consulted during the international search (name of data base and, where practicable, search terms used)

3GPP, CNTXT, ENTXT, ENTXTC, WPABSC: 信道状态信息, 开销, 消耗, 成本, 预编码矩, 报告, 上报, 矢量, 标量, 机器学习, 神经网络, 上限, 小于, 等于, cost, Channel , State, CSI, PMI, Precoding, Matrix, Indicator, machine, learning, ML, Neural, Network

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| PX | CN 117014941 A (ZTE CORP.) 07 November 2023 (2023-11-07) description, paragraphs 37-63 and 313-321 | 1-4, 22-24 |
| X | US 2021351885 A1 (SAMSUNG ELECTRONICS CO., LTD.) 11 November 2021 (2021-11-11) description, paragraphs 78, 91-186, and 236 | 1-24 |
| A | CN 115603877 A (ZTE CORP.) 13 January 2023 (2023-01-13) entire document | 1-24 |
| A | CN 115996160 A (SAMSUNG ELECTRONICS CO., LTD.) 21 April 2023 (2023-04-21) entire document | 1-24 |
| A | WO 2022227081 A1 (QUALCOMM INCORPORATED et al.) 03 November 2022 (2022-11-03) entire document | 1-24 |

☐ Further documents are listed in the continuation of Box C.　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 March 2024** | **25 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/141352** |

| Patent document cited in search report | | | Publication date (day/month/year) | Patent family member(s) | | | Publication date (day/month/year) |
| --- | --- | --- | --- | --- | --- | --- | --- |
| CN | 117014941 | A | 07 November 2023 | WO | 2023207518 | A1 | 02 November 2023 |
| US | 2021351885 | A1 | 11 November 2021 | WO | 2020213964 | A1 | 22 October 2020 |
| | | | | IN | 201941015348 | A | 23 October 2020 |
| CN | 115603877 | A | 13 January 2023 | WO | 2023279954 | A1 | 12 January 2023 |
| | | | | CA | 3223207 | A1 | 12 January 2023 |
| CN | 115996160 | A | 21 April 2023 | DE | 102022126344 | A1 | 20 April 2023 |
| | | | | TW | 202318275 | A | 01 May 2023 |
| | | | | KR | 20230055987 | A | 26 April 2023 |
| | | | | US | 2023131694 | A1 | 27 April 2023 |
| WO | 2022227081 | A1 | 03 November 2022 | CN | 117223230 | A | 12 December 2023 |